(19) Europäisches Patentamt
European Patent Office
Office européen des brevets

(11) Numéro de publication : **0 073 727**
**B1**

(12) # FASCICULE DE BREVET EUROPÉEN

(45) Date de publication du fascicule du brevet : **07.11.84**

(51) Int. Cl.³ : **A 01 N 25/04**, A 01 N 47/30

(21) Numéro de dépôt : **82420112.3**

(22) Date de dépôt : **06.08.82**

(54) **Suspensions aqueuses concentrées à base de néburon.**

(30) Priorité : **10.08.81 FR 8115574**

(43) Date de publication de la demande : **09.03.83 Bulletin 83/10**

(45) Mention de la délivrance du brevet : **07.11.84 Bulletin 84/45**

(84) Etats contractants désignés : **AT BE CH DE FR GB IT LI LU NL SE**

(56) Documents cités :
**FR-A- 2 183 625**
**FR-A- 2 206 049**
**US-A- 3 399 991**

(73) Titulaire : **RHONE-POULENC AGROCHIMIE**
**14-20, rue Pierre Baizet**
**F-69009 Lyon (FR)**

(72) Inventeur : **Barlet, Denis**
**17 K, Rue Ernest Frabrègues**
**F-69009 Lyon (FR)**
Inventeur : **Dini, Alain**
**291, Rue de Montesquleu**
**F-69400 Villefranche S/ Saone (FR)**

(74) Mandataire : **Chrétien, François et al**
**RHONE-POULENC AGROCHIMIE BP 9163**
**F-69263 Lyon Cedex 1 (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 073 727 B1

Jouve, 18, rue St-Denis, 75001 Paris, France

**Description**

La présente invention concerne de nouvelles compositions herbicides, leur préparation et leur application. Elle a pour objet plus particulièrement de nouvelles suspensions aqueuses concentrées à base de néburon.

Le néburon, nom commun de la (dichloro-3,4 phényl)-1 méthyl-3 n-butyl-3 urée, est un herbicide connu, notamment pour le désherbage sélectif des cultures, en particulier des céréales notamment en prélevée.

Les compositions herbicides commerciales à base de néburon ont été pendant longtemps des poudres mouillables. Cependant, on a cherché, depuis quelques années, à mettre au point des compositions liquides à base de cette matière active, en particulier des suspensions aqueuses concentrées, qui présentent des avantages importants, quant à la facilité de stockage (volume réduit), de manipulation (absence de poussière) et d'application (dosage plus aisé).

Certaines compositions de ce type ont été proposées, lesquelles contenaient, outre le néburon, seul ou en mélange avec en général au moins un autre herbicide, un épaississant et au moins un agent tensio-actif mouillant et/ou dispersant.

Cependant, ces compositions ne sont pas stables physiquement et donnent lieu, au bout de seulement quelques mois de stockage, à un épaississement de la composition avec sédimentation et formation irréversible d'une colle pouvant aller, si la température de stockage s'élève, jusqu'à une prise en masse complète. Ainsi, lors de sa dispersion dans l'eau au moment de l'utilisation, la composition ne peut pas être remise en suspension ou ne peut l'être que difficilement ; dans le moins mauvais des cas, les particules solides de la dilution peuvent avoir un diamètre suffisamment grand pour provoquer le bouchage des buses de pulvérisation.

La demanderesse a maintenant trouvé des compositions herbicides fluides à base de néburon, d'une grande stabilité au stockage, même prolongé.

L'invention concerne donc de nouvelles suspensions aqueuses concentrées à base de néburon, contenant de manière usuelle comme adjuvants, un épaississant, au moins un agent mouillant et/ou au moins un agent dispersant, caractérisées en ce qu'elles contiennent en outre, de 1 à 10 %, et de préférence de 2 à 6 %, en poids par rapport au néburon, d'un stabilisant de formule :

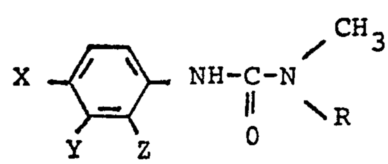

(I)

dans laquelle :

X, Y et Z, identiques ou différents, représentent chacun un atome d'hydrogène, ou un atome d'halogène, ou un radical alcoyle contenant de 1 à 4 atomes de carbone, éventuellement halogéné et R représente un radical alcoyle contenant de 1 à 3 atomes de carbone.

Des compositions préférées contiennent, comme stabilisant spécifique, un composé de formule :

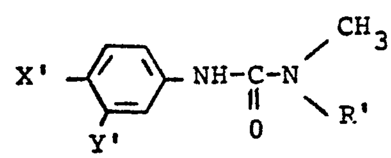

(II)

dans laquelle :

R' représente un radical méthyle ou éthyle,

X' est un atome d'hydrogène ou d'halogène (de préférence le chlore ou le brome) ou un radical alcoyle contenant de 1 à 4 atomes de carbone,

Y' est un atome d'hydrogène ou d'halogène (de préférence le chlore ou le brome) ou un radical trifluorométhyle, au moins l'un de ces deux substituants X' et Y' étant, de préférence, un atome d'halogène.

De bons résultats ont été obtenus avec des stabilisants de formule générale (II), dans laquelle X' est un atome de chlore ou de brome ou un radical méthyle et Y' est soit l'hydrogène quand X' est un atome de chlore ou de brome, soit un atome de chlore ou de brome.

La teneur en stabilisant selon l'invention est généralement comprise entre 1 et 10 % en poids par rapport au néburon. Des quantités inférieures à 1 % ne sont, en général, pas capables d'apporter une stabilité suffisante aux suspensions aqueuses concentrées. Par ailleurs des quantités supérieures à 10 % n'améliorent pas l'effet stabilisant tout en état défavorables du point de vue économique. De plus, elles peuvent présenter l'inconvénient d'atteindre des doses provoquant un effet herbicide secondaire néfaste.

Ces compositions sont en outre caractérisées en ce que au moins 95 % en poids des particules solides

en suspension ont un diamètre inférieur à 20 µm, 50 % en poids ayant un diamètre au plus égal à 7 µm et de préférence au plus égal à 5 µm.

Les compositions herbicides selon l'invention contiennent, comme matière active, le néburon, qui peut être seul ou en mélange avec d'autres herbicides complémentaires comme par exemple des dérivés du diphényléther tels le nitrofène et le bifenox, des urées telles que l'isoproturon, des triazines telles que la terbutryne ou l'atrazine ou des dinitroamines telles que la pendiméthaline, ou tout autre herbicide ne modifiant pas de manière sensible la stabilité du néburon selon l'invention.

Les concentrations du néburon des formulations selon l'invention varient dans la gamme généralement utilisée de 100 g/l à 600 g/l et de préférence de 200 g/l à 500 g/l. Donc, compte-tenu des proportions définies ci-dessus, ces suspensions contiennent de 0,2 à 3,6 % et de préférence de 0,25 à 3 %, en poids de stabilisant.

Les épaississants utilisés dans les compositions selon l'invention sont des produits tels que, ajoutés à de l'eau ou à des solutions ou suspensions aqueuses des pesticides, ils confèrent à ces dernières des propriétés de pseudoplasticité.

Les épaississants utilisables dans l'invention peuvent être de nature minérale ou organique.

Comme épaississants de type minéral, on peut citer les attapulgites, les bentonites, les laponites et les silices colloïdales.

Comme épaississants de type organique, on peut citer les alginates et surtout les biopolymères hydrophiles de type hétéropolysaccharidique, ces biopolymères étant les épaississants préférés selon l'invention.

La quantité d'épaississant dans les compositions selon l'invention est généralement comprise entre 0,01 et 15 % en poids et avantageusement entre 0,05 et 10 % en poids. Dans le cas où l'épaississant est un biopolymère hydrophile hétéropolysaccharidique, la quantité d'épaississant est généralement comprise entre 0,01 et 2 % en poids, de préférence comprise entre 0,05 et 0,5 % en poids.

Les biopolymères hydrophiles de type hétéropolysaccharidiques utilisables dans l'invention sont des produits connus. Ils ont un poids moléculaire supérieur à 200 000 et de préférence supérieur à 1 000 000 ; ils ont des propriétés de pseudoplasticité et sont généralement obtenus par action (c'est-à-dire par fermentation) de bactéries du genre Xanthomonas sur des hydrates de carbone. Ces biopolymères sont aussi quelquefois désignés par d'autres expressions assez diverses telles que : colloïdes hydrophiles de Xanthomonas ; gommes hétéropolysaccharidiques ; gommes xanthanes ; hétéropolysaccharides extracellulaires provenant de Xanthomonas ou de bactéries de la famille des pseudomonacées. Le mot biopolymère est utilisé dans le sens qu'il s'agit de polymères issus d'un procédé biologique (fermentation bactérienne en l'occurence).

Les bactéries utilisées pour la préparation de ces biopolymères sont le plus souvent Xanthomonas campestris mais on peut aussi utiliser d'autres Xanthomonas telles que Xanthomonas carotae, Xanthomonas incanae, Xanthomonas begoniae, Xanthomonas malvacearum, Santhomonas vesicatoria, Xanthomonas translucens, Xanthomonas vasculorum. Des hydrates de carbones appropriés pour la fermentation à l'aide de bactéries Xanthomonas sont de glucose, le sucrose, le fructose, le maltose, le lactose, le galactose, l'amidon, la fécule de pomme de terre, etc...

Outre l'épaississant du type ci-dessus les compositions selon l'invention contiennent des agents tensioactifs usuels dans la fabrication des suspensions aqueuses concentrées, à savoir au moins un agent mouillant et au moins un agent dispersant. Ces deux propriétés peuvent se retrouver dans un même produit, auquel cas, par souci de simplification, un seul agent à action mixte peut être utilisé.

L'agent mouillant convenable est de préférence de type non ionique tel qu'un (poly)alcoylphénoléthoxylé, un polyarylphénoléthoxylé, un alcool éthoxylé ou une amine grasse éthoxylée. Ce composé est en général présent dans les suspensions aqueuses concentrées à raison de 0,5 à 5 % et de préférence de 1 à 3 % en poids.

L'agent tensio-actif dispersant convenable est généralement de type anionique, tel que, par exemple, des sels d'acides forts, comme des phosphates ou des sulfonates, de condensats d'oxyde d'éthylène (en général de 8 à 20 moles) sur des alcoylphénols, des polyalcoylphénols ou des polyarylphénols. Cet agent dispersant est généralement présent dans les suspensions aqueuses concentrées à raison de 0,5 à 5 %, et de préférence, de 1 à 3 % en poids.

Les suspensions aqueuses concentrées selon l'invention peuvent en outre avantageusement contenir d'autres adjuvants usuels tels que antigel (à raison de 5 à 10 % en poids), antimousse tel que des émulsions d'huile silicone ou alcool gras (à raison de 0,2 à 1 % en poids) ou encore, dans le cas où l'épaississant est un biopolymère, un agent conservateur (à raison de 0,1 à 0,5 % en poids), tel qu'une composition à base de formol.

Les compositions selon l'invention peuvent être préparées, par exemple, en deux étapes.

La première consiste à ajouter dans de l'eau l'agent mouillant, l'agent dispersant et le cas échéant l'antigel.

Dans la seconde, on disperse, sous agitation, dans la composition aqueuse obtenue, le néburon et éventuellement le ou les herbicides complémentaires ainsi que le stabilisant. La suspension obtenue est ensuite affinée dans un broyeur, par exemple du type broyeur à billes, comme le broyeur commercialisé sous la marque DYNOMILL. Lorsque l'épaississant est de nature minérale, il est ajouté tel quel dans la seconde étape.

Si par contre, l'épaississant est un biopolymère, il est ajouté sous forme d'une prédispersion dans une petite quantité d'eau contenant l'agent conservateur (par exemple du formol en solution aqueuse à 40 %).

Les exemples suivants sont donnés à titre non limitatif pour illustrer la préparation et la composition des suspensions aqueuses concentrées selon l'invention ainsi que leur stabilité au stockage améliorée par rapport aux formulations connues.

## Exemple 1

Dans un premier temps on verse dans de l'eau un éther d'alcoylphénol et d'oxyde d'éthylène (à 13 moles) comme mouillant, un phosphate salifié d'éther d'alcoylphénol et d'oxyde d'éthylène (à 9 moles) comme dispersant et du glycol comme antigel. Puis, à la composition obtenue, on ajoute, sous agitation du néburon et de la (dichloro-3,4 phényl)-3 diméthyl-1,1 urée. La suspension obtenue est affinée dans un broyeur à billes (marque DYNOMILL). On ajoute alors, sous agitation une prédispersion dans une solution aqueuse contenant du formol (conservateur) du biopolymère hydrophile hétéropolysaccharidique et d'une huile silicone à action antimousse. Les quantités ont été calculées de manière à obtenir la composition suivante, en poids :

| | | |
|---|---|---|
| Néburon | | 36,4 % |
| Glycol (antigel) | | 5 % |
| Mouillant | | 2,5 % |
| Dispersant | | 2,5 % |
| Antimousse | | 0,4 % |
| Conservateur | | 0,3 % |
| Epaississant | | 0,2 % |
| Stabilisant | | 1 % |
| Eau | q.s.p. | 100 % |

Dans cette formulation, le stabilisant est la (dichloro-3,4 phényl)-3 diméthyl-1,1 urée ; sa teneur en poids par rapport au néburon est de 2,75 %.

On prépare également selon le même mode opératoire une composition analogue si ce n'est qu'elle ne contient pas de stabilisant selon l'invention.

On soumet chacune de ces compositions à trois tests respectivement au temps to, au bout d'un mois à 50 °C dans une étuve et après 5 semaines, après un séjour dans une étuve à température variable, avec un cycle hebdomadaire de 4 jours à + 35 °C suivis de 3 jours à − 10 °C (test gel-dégel ou G/D). Les trois tests utilisés sont les suivants :

1) Test d'autodispersion : on verse 5 g de la suspension concentrée dans une éprouvette de 250 ml remplie d'eau.

On note l'allure de la dispersion selon la notation suivante :

— dispersion dès la première goutte : très bonne (T.B)
— le produit tombe en flocons dispersés : médiocre (M)
— le produit tombe en blocs compacts : nulle (0).

2) On mesure la viscosité dynamique, exprimée en centipoises (mesure faite à l'aide d'un viscosimètre rotatif RHEOMAT 30 de CONTRAVES).

3) On mesure le diamètre moyen des particules à l'aide d'un compteur COULTER-COUNTER (pourcentage cumulé en poids).

Le tableau (I) rassemble les résultats obtenus pour chaque suspension testée, chaque test étant effectué respectivement aux trois moments choisis.

Ces résultats montrent clairement que :

1) à l'instant to les deux suspensions ont les mêmes propriétés,

2) au bout de 30 jours à 50 °C, la suspension connue n'est plus autodispersible ni coulable ce qui correspond a une augmentation très importante du diamètre des particules, tandis que la suspension contenant le stabilisant selon l'invention garde les excellentes propriétés de départ,

3) la suspension connue présente une mauvaise tenue au test gel/dégel alors que la suspension stabilisée selon l'invention conserve ses excellentes propriétés d'origine.

## Exemple 2

On obtient des résultats analogues lorsqu'on remplace, comme stabilisant dans la composition selon

l'invention décrite à l'exemple 1, la (dichloro-3,4 phényl)-3 diméthyl-1,1 urée par une quantité égale de (chloro-4 phényl)-3 diméthyl-1,1 urée ou de (chloro-3 méthyl-4 phényl)-3 diméthyl-1,1 urée, ou de (bromo-3 phényl)-3 diméthyl-1,1 urée, ou de (bromo-4 phényl)-3 diméthyl-1,1 urée, ou de (méthyl-4 phényl)-3 diméthyl-1,1 urée, ou de (chloro-3, méthyl-4 phényl)-3 méthyl-1, éthyl-1 urée.

Exemple 3

En utilisant le même mode opératoire qu'à l'exemple 1 on prépare les compositions suivantes exprimées en poids :

| | 3A | 3B |
|---|---|---|
| Néburon | 25 % | 45 % |
| Antigel | 5 % | 6 % |
| Mouillant | 2 % | 3 % |
| Dispersant | 1,5 % | 2,5 % |
| Antimousse | 0,3 % | 0,5 % |
| Conservateur | 0,3 % | 0,3 % |
| Epaississant | 0,2 % | 0,2 % |
| Stabilisant | 0,5 % | 1,5 % |
| (soit 3,3 % en poids par rapport au néburon) | | |
| Eau q.s.p. | 100 % | |

Dans ces formulations, on a successivement utilisé comme stabilisant la (dichloro-3,4 phényl)-3 diméthyl-1,1 urée, la (chloro-4 phényl)-3 diméthyl-1,1 urée, la (chloro-3 méthyl-4 phényl)-3 diméthyl-1,1 urée ; la teneur en poids de 0,5 % par rapport à la formulation correspond à une teneur de 2 % en poids par rapport au néburon ; la teneur en poids de 1,5 % par rapport à la formulation correspond à une teneur de 3,3 % en poids par rapport au néburon.

Exemple 4

En utilisant le même mode opératoire qu'à l'exemple 1 on prépare la composition suivante exprimée en poids :

| | |
|---|---|
| Néburon | 23 % |
| Isoproturon | 23 % |
| Antigel | 5 % |
| Mouillant | 2,5 % |
| Dispersant | 1,5 % |
| Antimousse | 0,5 % |
| Epaississant | 0,2 % |
| Conservateur | 0,3 % |
| Stabilisant | 0,5 % |
| Eau | q.s.p 100 % |

Dans cette formulation, on a utilisé successivement comme stabilisant la (dichloro-3,4 phényl)-3 diméthyl-1,1 urée, la (chloro-4 phényl)-3 diméthyl-1,1 urée la (chloro-3 méthyl-4 phényl)-3 diméthyl-1,1 urée, la bromo-3 phényl)-3 diméthyl-1,1 urée, la bromo-4 phényl)-3 diméthyl-1,1 urée, la (méthyl-4 phényl)-3 diméthyl-1,1 urée et la (chloro-3, méthyl-4 phényl)-3 méthyl-1, éthyl-1 urée ; sa teneur en poids par rapport au néburon est de 2,2 %.

Dans cette formulation, le dispersant est le phosphate salifié d'éther de polyarylphénol et d'oxyde d'éthylène (à environ 18 moles).

On soumet cette suspension aux mêmes tests que ceux décrits à l'exemple 1, comparativement à une suspension analogue sans stabilisant selon l'invention. Les résultats sont rassemblés dans le tableau (II) :

On peut faire les mêmes remarques qu'à l'exemple 1 en ajoutant que l'effet de stabilisation n'est pas altéré par la présence de l'isoproturon.

Exemple 5

On opère comme à l'exemple 4 si ce n'est que toutes choses étant égales, par ailleurs on fait varier la teneur en stabilisant

| % de stabilisant par rapport à la formulation | 0,3 | 0,75 | 1 | 2 | 2,5 |
|---|---|---|---|---|---|
| % de stabilisant par rapport au néburon | 1,2 | 3 | 4 | 8 | 10 |

Exemple 6

En utilisant le même mode opératoire qu'à l'exemple 1, on prépare la suspension aqueuse concentrée de composition pondérale suivante :

| | | |
|---|---|---|
| Néburon | | 20 % |
| Isoproturon | | 15 % |
| Bifénox | | 15 % |
| Antigel (glycol) | | 5 % |
| Mouillant | | 1,5 % |
| Dispersant | | 1 % |
| Antimousse | | 0,3 % |
| Epaississant | | 0,2 % |
| Conservateur | | 0,3 % |
| Stabilisant | | 0,5 % |
| Eau | q.s.p. | 100 % |

Dans cette formulation, on a utilisé successivement comme stabilisant la (dichloro-3,4 phényl)-3 diméthyl-1,1 urée, la (chloro-4 phényl)-3 diméthyl-1,1 urée, la (chloro-3 méthyl-4 phényl)-3 diméthyl-1,1 urée, la (bromo-3 phényl)-3 diméthyl-1,1 urée, la (bromo-4 phényl)-3 diméthyl-1,1 urée, la (méthyl-4 phényl)-3 diméthyl-1,1 urée et la (chloro-3, méthyl-4 phényl)-3 méthyl-1, éthyl-1 urée ; sa teneur en poids par rapport au néburon est de 2,5 %.

Exemple 7

En utilisant le même mode opératoire qu'à l'exemple 1, on prépare la suspension aqueuse concentrée de composition pondérale suivante :

| | | |
|---|---|---|
| Néburon | | 25 % |
| Nitrofène | | 20 % |
| Antigel (glycol) | | 5 % |
| Mouillant | | 3 % |
| Dispersant | | 2 % |
| Antimousse | | 0,3 % |
| Epaississant | | 0,2 % |
| Conservateur | | 0,3 % |
| Stabilisant | | 0,5 % |
| Eau | q.s.p. | 100 % |

Dans cette formulation, on a utilisé successivement comme statilisant la (dichloro-3,4 phényl)-3 diméthyl-1,1 urée, la (chloro-4 phényl)-3 diméthyl-1,1 urée, la (bromo-3 phényl)-3 diméthyl-1,1 urée, la (bromo-4 phényl)-3 diméthyl-1,1 urée, la (méthyl-4 phényl)-3 diméthyl-1,1 urée et la (chloro-3, méthyl-4 phényl)-3 méthyl-1, éthyl-1 urée ; sa teneur en poids par rapport au néburon est de 2 %.

Exemple 8

En utilisant le même mode opératoire qu'à l'exemple 1, on prépare la suspension aqueuse concentrée de composition pondérale suivante :

| | | |
|---|---|---|
| Néburon | | 25 % |
| Atrazine ou Terbutryne | | 15 % |
| Antigel | | 5 % |
| Mouillant | | 2 % |
| Dispersant | | 2 % |
| Antimousse | | 0,4 % |
| Epaississant | | 0,2 % |
| Conservateur | | 0,3 % |
| Stabilisant | | 1 % |
| Eau | q.s.p. | 100 % |

Dans cette formulation, on a utilisé successivement comme stabilisant la (dichloro-3,4 phényl)-3 diméthyl-1,1 urée, la (chloro-4 phényl)-3 diméthyl-1,1 urée la (chloro-3 méthyl-4 phényl)-3 diméthyl-1,1 urée, la (bromo-3 phényl)-3 diméthyl-1,1 urée, la (bromo-4 phényl)-3 diméthyl-1,1 urée, la (méthyl-4 phényl)-3 diméthyl-1,1 urée et la (chloro-3, méthyl-4 phényl)-3 méthyl-1, éthyl-1 urée ; sa teneur en poids par rapport au néburon est de 4 %.

Tableau (I)

| Test | Sans stabilisant (technique connue) | | | Avec stabilisant (selon l'invention) | | |
|---|---|---|---|---|---|---|
| Date / Nature | to | to + 30 j à 50 °C | G/D | to | to + 30 j à 50 °C | G/D |
| Autodispersion | TB | 0 | M | TB | TB | TB |
| Viscosité dynamique en Pa·s | 2,73 | non coulable | 11,6 | 2,73 | 2,18 | 1,91 |
| Diamètre moyen en μm | 2,9 | 13,5 | 6,1 | 2,3 | 3,15 | 2,75 |

Tableau (II)

| Test | Sans stabilisant (technique connue) | | | Avec stabilisant (selon l'invention) | | |
|---|---|---|---|---|---|---|
| Date / Nature | to | to + 30 j à 50 °C | G/D | to | to + 30 j à 50 °C | G/D |
| Autodispersion | TB | 0 | M | TB | TB | TB |
| Viscosité dynamique en Pa·s | 3,4 | 21,8 | 5,04 | 3,4 | 4,91 | 2,32 |
| Diamètre moyen en μm | 2;7 | 4,1 | 3,15 | 2,5 | 2,83 | 2,85 |

**Revendications**

1. Compositions herbicides à base de néburon, sous forme de suspensions aqueuses concentrées contenant du néburon et éventuellement les adjuvants épaississant, mouillant et/ou dispersant usuels, caractérisées en ce qu'elles contiennent, en outre de 1 à 10 % en poids, par rapport au néburon, d'un stabilisant de formule :

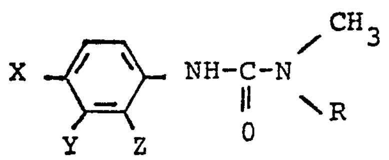

(I)

dans laquelle :

X, Y et Z, identiques ou différents, représentent chacun un atome d'hydrogène, un atome d'halogène ou un radical alcoyle contenant de 1 à 4 atomes de carbone éventuellement halogéné, et

R représente un radical alcoyle contenant de 1 à 3 atomes de carbone.

2. Compositions herbicides selon la revendication 1 caractérisées en ce que le stabilisant est un composé de formule :

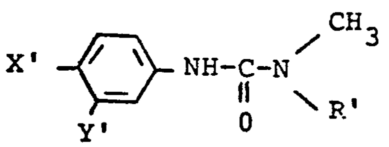

(II)

dans laquelle :

R' représente un radical méthyle ou éthyle

X' représente un atome d'hydrogène, un atome d'halogène ou un radical alcoyle contenant de 1 à 4 atomes de carbone

Y' représente un atome d'hydrogène ou d'halogène ou un radical trifluorométhyle.

3. Compositions herbicides selon la revendication 2 caractérisées en ce que dans la formule (II),

X' est un atome de chlore ou de brome ou un radical méthyle et,

Y' est soit l'hydrogène quand X' est un atome de chlore ou de brome, soit un atome de chlore ou de brome.

4. Compositions herbicides selon l'une des revendications 1 à 3 caractérisées en ce que, dans la formule, les atomes d'halogène sont des atomes de chlore.

5. Compositions herbicides selon la revendication 4 caractérisées en ce que le stabilisant est la (dichloro-3,4 phényl)-3 diméthyl-1,1 urée.

6. Compositions herbicides selon la revendication 4 caractérisées en ce que le stabilisant est la (chloro-4 phényl)-3 diméthyl-1,1 urée.

7. Compositions herbicides selon la revendication 4 caractérisées en ce que le stabilisant est la (chloro-3 méthyl-4 phényl)-3 diméthyl-1,1 urée.

8. Compositions herbicides selon l'une des revendications 1 à 7 caractérisées en ce qu'elles contiennent de 2 à 6 %, en poids, de stabilisant par rapport au néburon.

9. Compositions herbicides selon l'une des revendications 1 à 8 caractérisées en ce qu'au moins 95 % en poids des particules solides en suspension ont un diamètre inférieur à 20 microns, 50 % en poids ayant un diamètre inférieur à 7 microns.

10. Compositions selon l'une des revendications 1 à 9 caractérisées en ce qu'elles contiennent comme matière active, du néburon associé à au moins un autre herbicide.

11. Composition selon la revendication 10 caractérisée en ce que l'autre herbicide est l'isoproturon.

12. Composition selon la revendication 10 caractérisée en ce que l'autre herbicide est le nitrofène.

13. Composition selon la revendication 10 caractérisée en ce que l'autre herbicide est le bifénox.

14. Composition selon la revendication 10 caractérisée en ce que l'autre herbicide est la terbutryne ou l'atrazine.

15. Procédé de fabrication d'une suspension aqueuse concentrée à base de néburon selon l'une des revendications 1 à 14 caractérisé en ce que :

a) on prépare une solution aqueuse contenant l'agent mouillant, l'agent dispersant puis

b) on disperse dans la solution obtenue, sous agitation, le néburon et éventuellement les herbicides complémentaires ainsi que l'épaississant

c) on affine par broyage la dispersion obtenue.

16. Procédé selon la revendication 15 caractérisé en ce que lorsque l'épaississant est un biopolymère, celui-ci est ajouté à la dispersion broyée, sous forme d'une prédispersion dans de l'eau contenant un conservateur.

17. Procédé selon la revendication 15 caractérisé en ce que lorsque l'épaississant est minéral, il est ajouté à la dispersion avant le broyage.

**Claims**

1. A herbicidal composition based on neburon, in the form of a concentrated aqueous suspension containing neburon and, if appropriate, the usual thickening, wetting and/or dispersing adjuvants, characterized in that it also contains from 1 to 10 % by weight, relative to neburon, of a stabiliser of the formula :

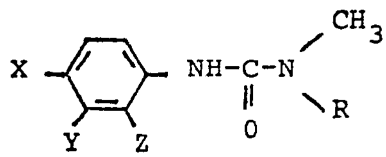

(I)

in which :

X, Y and Z are identical or different and each represents a hydrogen atom, a halogen atom or an optionally halogenated alkyl radical containing from 1 to 4 carbon atoms and

R represents an alkyl radical containing from 1 to 3 carbon atoms.

2. A herbicidal composition according to claim 1, characterized in that the stabiliser is a compound of the formula :

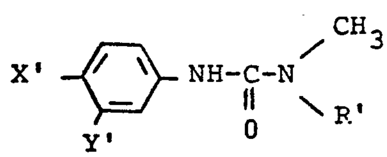

(II)

in which :

R' represents a methyl or ethyl radical,

X' represents a hydrogen atom, a halogen atom or an alkyl radical containing from 1 to 4 carbon atoms and

Y' represents a hydrogen or halogen atom or a trifluoromethyl radical.

3. A herbicidal composition according to claim 2, characterized in that in the formula (II),

X' is a chlorine or bromine atom or a methyl radical and Y' is either hydrogen, if

X' is a chlorine or bromine atom, or a chlorine or bromine atom.

4. A herbicidal composition according to one of claims 1 to 3, characterized in that, in the formula, the halogen atoms are chlorine atoms.

5. A herbicidal composition according to claim 4, characterized in that the stabiliser is 3-(3,4-dichlorophenyl)-1,1-dimethylurea.

6. A herbicidal composition according to claim 4, characterized in that the stabiliser is 3-(4-chlorophenyl)-1,1-dimethylurea.

7. A herbicidal composition according to claim 4, characterized in that the stabiliser is 3-(3-chloro-4-methylphenyl)-1,1-dimethylurea.

8. A herbicidal composition according to one of claims 1 to 7, characterized in that it contains from 2 to 6 % by weight of stabiliser, relative to neburon.

9. A herbicidal composition according to one of claims 1 to 8, characterized in that at least 95 % by weight of the solid particles in suspension have a diameter of less than 20 microns, 50 % by weight having a diameter of less than 7 microns.

10. A composition according to one of claims 1 to 9, characterized in that it contains, as the active ingredient, neburon together with at least one other herbicide.

11. A composition according to claim 10, characterized in that the other herbicide is isoproturon.

12. A composition according to claim 10, characterized in that the other herbicide is nitrofen.

13. A composition according to claim 10, characterized in that the other herbicide is bifenox.

14. A composition according to claim 10, characterized in that the other herbicide is terbutryne or atrazine.

15. A process for the preparation of a concentrated aqueous suspension based on neburon, according to one of claims 1 to 14, characterized in that it comprises :

a) preparing an aqueous solution containing the wetting agent and the dispersing agnet, then

b) dispersing neburon and, if appropriate, the complementary herbicides, as well as the thickener, in the solution obtained, with stirring, and

c) comminuting the dispersion obtained, by milling.

16. A process according to claim 15, characterized in that, if the thickener is a biopolymer, this is added to the milled dispersion in the form of a predispersion in water containing a preservative.

17. A process according to claim 15, characterized in that, if the thickener is mineral, it is added to the dispersion before milling.

**Ansprüche**

1. Herbizide Zusammensetzungen auf der Basis von Neburon in Form konzentrierter wäßriger Suspensionen, die Neburon und ggf übliche Verdickungsmittel, Netzmittel und/oder Dispergiermittel enthalten, gekennzeichnet durch 1-10 Gew.-%, bezogen auf das Gewicht des Neburons, eines Stabilisierungsmittels der Formel I :

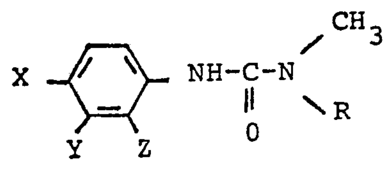

(I),

in der bedeuten :

X, Y un Z zugleich oder unabhängig Wasserstoff, Halogen oder $C_1$- bis $C_4$-Alkyl, das gegebenenfalls halogeniert ist, und

R $C_1$- bis $C_3$-Alkyl.

2. Herbizide Zusammensetzungen nach Anspruch 1, gekennzeichnet durch ein Stabilisierungsmittel der Formel II :

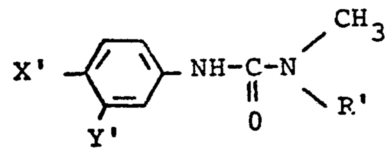

(II),

in der bedeuten :

X' Wasserstoff, Halogen oder $C_1$- bis $C_4$-Alkyl,

Y' Wasserstoff, Halogen oder Trifluormethyl und

R' Methyl oder Ethyl.

3. Herbizide Zusammensetzungen nach Anspruch 2, gekennzeichnet durch ein Stabilisierungsmittel der Formel II, in der

X' Chlor, Brom oder Methyl und

Y' Wasserstoff, wenn X' Chlor oder Brom ist, oder Chlor oder Brom bedeuten.

4. Herbizide Zusammensetzungen nach einem der Ansprüche 1 bis 3, dadurch gekennzeichnet dass in der Formel die Halogenatome Chloratome sind.

5. Herbizide Zusammensetzungen nach Anspruch 4, gekennzeichnet durch 3-(3,4-Dichlorphenyl)-1,1-dimethylharnstoff als Stabilisierungsmittel.

6. Herbizide Zusammensetzungen nach Anspruch 4, gekennzeichnet durch 3-(4-Chlorphenyl)-1,1-dimethylharnstoff als Stabilisierungsmittel.

7. Herbizide Zusammensetzungen nach Anspruch 4, gekennzeichnet durch 3-(3-Chlor-4-methylphenyl)-1,1-dimethylharnstoff als Stabilisierungsmittel.

8. Herbizide Zusammensetzungen nach einem der Ansprüche 1 bis 7, gekennzeichnet durch 2-6 Gew.-% Stabilisierungsmittel, bezogen auf das Gewicht des Neburons.

9. Herbizide Zusammensetzungen nach einem der Ansprüche 1 bis 8, dadurch gekennzeichnet, daß mindestens 95 Gew.-% der suspendierten Feststoffpartikel einen Durchmesser unter 20 µm und mindestens 50 Gew.-% einen Durchmesser unter 7 µm aufweisen.

10. Herbizide Zusammensetzungen nach einem der Ansprüche 1 bis 9, dadurch gekennzeichnet, daß sie als Wirkstoff neben Neburon noch mindestens ein weiteres Herbizid enthalten.

11. Zusammensetzungen nach Anspruch 10, gekennzeichnet durch Isoproturon als weiteres Herbizid.

12. Zusammensetzungen nach Anspruch 10, gekennzeichnet durch Nitrofen als weiteres Herbizid.

13. Zusammensetzungen nach Anspruch 10, gekennzeichnet durch Bifenox als weiteres Herbizid.

14. Zusammensetzungen nach Anspruch 10, gekennzeichnet durch Terbutryn oder Atrazin als weiteres Herbizid.

15. Verfahren zur Herstellung der wäßrigen konzentrierten Suspensionen auf der Basis von Neburon nach einem der Ansprüche 1 bis 14, gekennzeichnet durch

a) Herstellung einer wäßrigen Lösung, die das Netzmittel und das Dispergiermittel enthält,

b) Dispergieren unter Rühren von Neburon, ggf mit zusätzlichen Herbiziden, und des Verdickungsmittels in der erhaltenen Lösung und

c) Zerkleinern der erhaltenen Dispersion durch Mahlen.

16. Verfahren nach Anspruch 15, dadurch gekennzeichnet, daß das Verdickungsmittel, wenn es ein Biopolymer darstellt, der zerkleinerten Dispersion in Form einer ein Konservierungsmittel enthaltenden wäßrigen Vordispersion zugesetzt wird.

17. Verfahren nach Anspruch 15, dadurch gekennzeichnet, daß das Verdickungsmittel, wenn es ein anorganisches bzw mineralisches Verdickungsmittel ist, der Dispersion vor der Zerkleinerung zugesetzt wird.